(19) Europäisches Patentamt
European Patent Office
Office européen des brevets

(11) Veröffentlichungsnummer : **0 093 944**
**B1**

(12) # EUROPÄISCHE PATENTSCHRIFT

(45) Veröffentlichungstag der Patentschrift : **20.08.86**

(51) Int. Cl.⁴ : **G 02 B 1/04**, G 02 C 7/04, B 29 D 11/00// C08F116/06

(21) Anmeldenummer : **83104074.6**

(22) Anmeldetag : **26.04.83**

(54) **Getemperte Polyvinylalkohol-Kontaktlinse.**

(30) Priorität : **29.04.82 US 372893**

(43) Veröffentlichungstag der Anmeldung : **16.11.83 Patentblatt 83/46**

(45) Bekanntmachung des Hinweises auf die Patenterteilung : **20.08.86 Patentblatt 86/34**

(84) Benannte Vertragsstaaten : **AT BE CH DE FR IT LI LU NL SE**

(56) Entgegenhaltungen :
**GB-A- 1 543 189**
**US-A- 3 408 429**
**US-A- 4 255 415**
**"ULLMANNS ENCYKLOPÄDIE DER TECHNISCHEN CHEMIE", 4. Auflage, Band 19, 1980 VERLAG CHEMIE, Weinheim, Deerfield Beach, Florida, Basel Seiten 374-378**

(73) Patentinhaber : **CIBA-GEIGY AG**
**Klybeckstrasse 141**
**CH-4002 Basel (CH)**

(72) Erfinder : **Lee, Ping I., Dr.**
**6 Five Oaks Lane**
**Valley Cottage New York 10989 (US)**

EP 0 093 944 B1

Anmerkung : Innerhalb von neun Monaten. nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft weiche Kontaktlinsen, die aus thermisch getempertem Polyvinylalkohol hergestellt wurden.

Im allgemeinen leiden gegenwärtige wässrige gequollene weiche Kontaktlinsenmaterialien auf der Basis von Polymeren von HEMA, auch bekannt als Hydroxyethylmethacrylat oder als Ethylenglykolmonomethacrylat, entweder an einer geringen mechanischen Festigkeit, an einer niedrigen Permeabilität für gelösten Sauerstoff oder an einer Kombination von beiden. Darüberhinaus sind wässrige gequollene weiche Kontaktlinsen aus vernetztem HEMA mit einem oder mehreren wahlfreien Comonomeren bekannt, wie beschrieben in US-A-2 976 576, 3 841 985 und 3 985 697. Derartige Hydrogelpolymere leiden ebenfalls an entweder schwacher mechanischer Festigkeit, unzureichender Durchlässigkeit für gelösten Sauerstoff oder einer Kombination von beiden. Anstrengungen, die Sauerstoffpermeabilität durch Erhöhen des Wassergehalts der Hydrogels zu verbessern, führen zu einer weiteren Verringerung der mechanischen Festigkeit der Linsenmaterialien zu einem derartigen Ausmass, dass sie aßsserst zerbrechlich sind.

Es wurde auch ein mit Glyoxal vernetzter Polyvinylalkohol als Material für Kontaktlinsen in US-A-3 408 429 empfohlen. Jedoch sind keine Angaben über das Molekulargewicht des Polyvinylalkohols enthalten und es werden keine speziellen Angaben betreffend die in dem Vernetzungsschritt vorhandenen Wassermengen gemacht. Zusätzlich ist nichts über das Tempern unter die Kristallinität fördernden Bedingungen angegeben.

Ausserdem wurde über Polyvinylalkoholfolien und -Gels als opthalmische Einlagen in dem unteren Bindehautsack berichtet, getränkt mit Antibiotika, wie Tetracyclin, Pilocarpin, Atropin und dergleichen. Derartige Materialien liegen entweder in der Form von vernetzten Folien oder als eine wasserlösliche viskose Lösung oder als Gel vor. Vergl. beispielsweise Y. F. Maichuk, Ophthalmic Drug Inserts, Invest. Ophthalmol., Band 14, Seiten 87-90 (1975) ; D. W. Lamberts, Solid Delivery Devices, Int. Ophthalmol. Clinic, Band 20, Nr. 3, Seiten 68-69 (1980) und Y. F. Maichuk, Antibiotik, Band 12, Nr. 4, Seiten 43 2-5 (1967).

Es ist ein Zeil der vorliegenden Erfindung, weiche Kontaktlinsen aus Polyvinylalkohol bereitzustellen, die die vorstehenden Nachteile, die beim Stand der Technik vorliegen ausräumen oder wesentlich verringern.

Es ist ein weiteres Ziel der Erfindung, ein einfaches kostengünstiges Verfahren zur Herstellung derartiger Linsen bereitzustellen.

Die Erfindung betrifft dementsprechend eine weiche Kontaktlinse aus festem Polyvinylalkohol, die dadurch gekennzeichnet ist, dass der Polyvinylalkohol ein gewichtsmittleres Molekulargewicht von mindestens 6 000 aufweist, und dass die Kontaktlinse unter kristallinitätsfördernden Bedingungen auf einen Kristallinitätsgrad von 0,195 bis 0,7 getempert und in einem Quellungslösungsmittel gequollen wurde. Die Kontaktlinse kann gegebenenfalls mit einem vierwertigen Metallsalz oder -komplex oder einem organischen polyfunktionellen Vernetzungsmittel mässig vernetzt sein. Die resultierende getemperte und gegebenenfalls vernetzte gequollene Linse weist ein Sauerstoffdurchlässigkeitsvermögen in wässriger Umgebung auf, das über dem liegt, das zur Erfüllung der Erfordernisse der menschlichen Cornea benötigt wird.

Vorzugsweise weist der Polyvinylalkohol ein gewichtsmittleres Molekulargewicht von mindestens 10 000 auf.

Als obere Grenze kann der Polyvinylalkohol ein gewichtsmittleres Molekulargewicht von bis zu 1 000 000 aufweisen. Vorzugsweise hat der Polyvinylalkohol ein gewichtsmittleres Molekulargewicht von bis zu 300 000.

Polyvinylalkohol wird gewöhnlich hergestellt durch Hydrolyse des entsprechenden Polyvinylacetats. Bei einer bevorzugten Ausführungsform enthält der Polyvinylalkohol weniger als 1 Mol-% der Polyvinylacetateinheiten.

Gewöhnlich weist der Polyvinylalkohol vorwiegend eine Poly-(2-hydroxy)-ethylenstruktur auf. Jedoch kann das Polyvinylalkoholausgangsmaterial auch eine geringere Menge an Hydroxylgruppen in der Form von 1,2-Glykolen, wie Copolymereinheiten von 1,2-Dihydroxyethylen in der Kette aufweisen, die beispielsweise erhalten wurden durch alkalische Hydrolyse von Vinylacetat-Vinylencarbonat-Copolymeren. Vorteilhaft enthält ein derartiges Copolymeres weniger als 20 Mol-% derartiger Einheiten, vorzugsweise weniger als 10 Mol-% derartiger Einheiten, bezogen auf das Copolymere.

Darüberhinaus kann der Polyvinylalkohol geringere Mengen an Copolymereinheiten von Ethylen, Propylen, Acrylamid, Methacrylamid, Dimethacrylamid, Hydroxyethylmethacrylat, Methylmethacrylat, Methylacrylat, Ethylacrylat, Vinylpyrrolidon, Hydroxyethylacrylat, Allylalkohol und dergleichen enthalten. Vorzugsweise sollte das Polymere nicht mehr als 5 Mol-% von Einheiten enthalten, die sich vom Vinylalkohol unterscheiden. Am bevorzugtesten enthält der Polyvinylalkohol weniger als 1 Mol-% solcher Copolymereinheiten.

Handelsübliches Polyvinylalkoholharz kann verwendet werden, wie ELVANOL 71-30®, hergestellt von der DuPont oder Vinol 125®, hergestellt von der Air Products, Inc.

Vorzugsweise ist der zu tempernde Polyvinylalkohol im wesentlichen unlöslich in Wasser bis zu 50 °C am bevorzugtesten bis zu 60 °C.

Zwar sind solche bevorzugte Polyvinylalkoholharze nicht in Wasser löslich, jedoch sind sie in Wasser quellbar, vorzugsweise bis zu einem Ausmaß von mindestens 50 Gew.-% Wasser im Gleichgewicht bei 25 °C. Der Polyvinylalkohol, der getempert werden soll, liegt gewöhnlich in der Form einer die Form beibehaltenden Masse vor und kann in der Form einer Folie, eines Blocks, eines Stabs, einer Scheibe, einer Kopie einer Kontaktlinse oder als plastifizierte die Form beibehaltende Masse vorliegen. Der zu tempernde Polyvinylalkohol sollte vorteilhaft weniger als 20 Gew.-% Wasser, vorzugsweise nicht mehr als 15 Gew.-% Wasser enthalten, da beispielsweise unter erhöhten Temperaturbedingungen der Polyvinylalkohol dazu neigen kann, sich in dem vorhandenen Restwasser zu lösen. Wenn darüberhinaus ein Wasserüberschuß vorhanden ist, kann gewöhnlich die vorliegende vorteilhafte Zunahme der Kristallinität nicht erhalten werden.

Der zu tempernde Polyvinylalkohol kann bis zu 80 Gew.-% nicht wässrigen Weichmacher enthalten. Bevorzugte Weichmacher umfassen Polyole, wie Ethylenglykol, Propylenglykol und Glycerin, Amine, wie Pyridin, Trimethylamin und Ethanolamin, Ether, wie Ethylenglykolmono- und -dimethylether, oder Tetrahydrofuran, Formamid, Dimethylformamid, Dimethylsulfoxid oder Weichmachersalze, wie Natriumthiocyanat, Ammoniumthiocyanat, Ethanolaminsalze, einschließlich Triethanolaminacetat und Triethanolaminhydrochlorid und dergleichen. Die maximale Menge an Weichmacher, die für optimale Ergebnisse vorhanden ist, hängt von der Natur des Weichmachers und den Temperbedingungen für ein vorgegebenes Polyvinylalkoholmaterial ab. Ein wesentlicher Überschuß an Weichmacher unter erhöhten Temperaturbedingungen, wie sie bei dem thermischen Tempern vorhanden sein können, kann zu einer Phasentrennung des Weichmachers beim Tempern des Polyvinylalkohols führen und soll somit vermieden werden. Vorzugsweise sollte die Menge an Weichmacher im allgemeinen 70 Gew.-% des Weichmachers plus thermisch zu temperndem Polyvinylalkohol nich überschreiten.

Das Tempern des Polyvinylalkohols verstärkt den Kristallinitätsgrad, definiert als Gewichtsanteil des kristallinen Materials in dem Polyvinylalkoholpolymeren. Die geht mit einer Verringerung seines Gleichgewichtswassergehalts einher, wenn anschließend gequollen wird. Als ein Ergebnis der Steigerung des Gewichtsanteils des kristallinen Materials werden beträchtliche Verbesserungen der mechanischen Eigenschaften des Harzes und seiner Heißwasserbeständigkeit erzielt.

Der Kristallinitätsgrad, ausgedrückt als Gewichtsanteil des in dem trockenen Polymeren vorhandenen kristallinen Materials, wird nach der Dichtetechnik berechnet, die von A. Packter und M. S. Nerurkar, European Polymer Journal, Band 4, Seiten 685-693 (1968) angenommen wird, so die Dichte von 100 % kristallinem Polymerem als 1,340 angenommen wird und die Dichte von 100 % amorphem Polymeren als 1,270 für Polyvinylalkohol angegeben wird, bestimmt durch H. Tadokoro, Bull. Chem. Soc. Japan, Band 27, Seite 451 (1954) ; Band 28, Seite 599 (1955).

Das Polyvinylalkoholharz kann unter kristallinitätsfördernden Bedingungen nach verschiedenen Techniken getempert werden. Eine Methode besteht in dem sorgfältigen Verdampfen eines wässrigen oder wässrigen/Weichmacher enthaltenden Polyvinylalkoholgels gemäß der Technik, die in dem Artikel von A. Packter und M. S. Nerurkar, wie vorstehend erwähnt, angegeben wird.

Eine weitere Methode zum Tempern erfolgt durch spannungsinduzierte Kristallisation im festen Zustand, wie durch Hochdruck-Kompressionstechniken, beispielsweise bei etwa 3 447 kPa während eines längeren Zeitraums oder entsprechend höheren Drücken bei verkürzten Zeiträumen.

Vorzugsweise liegt jedoch der Polyvinylalkohol in der Form einer die Form beibehaltenden gegebenenfalls plastifizierten Masse vor und wird thermisch getempert, gegebenenfalls bei überatmosphärischem Druck, durch Wärmebehandlung, bis der gewünschte Kristallinitätsgrad erzielt ist. Beim thermischen Tempern liegt der Temperaturbereich vorteilhaft zwischen 45 °C und 200 °C, vorzugsweise zwischen 50 °C und 150 °C und am bevorzugtesten zwischen 75 °C und 125 °C. Der Polyvinylalkohol enthält vorteilhaft weniger als 20 Gew.-% Wasser, vorzugsweise nicht mehr als 15 Gew.-% Wasser und am bevorzugtesten weniger als 10 Gew.-% Wasser.

Die Temperzeit für das thermische Tempern variiert selbstverständlich in Abhängigkeit mit dem gewünschten Kristallinitätsgrad und dem verwendeten Temperaturbereich, liegt jedoch vorzugsweise im Bereich zwischen etwa 0,1 Minuten und etwa 180 Minuten, am bevorzugtesten zwischen etwa 1 Minute und etwa 120 Minuten unter Atmosphärendruck und dementsprechend bei kürzeren Zeiträumen unter überatmosphärischen Druckbedingungen.

Das thermische Tempern kann in einem Inertgas durchgeführt werden, wie Stickstoff, Helium oder dergleichen, oder in der Umgebungsluft. Vorzugsweise ist die Atmosphäre Luft mit einer relativen Feuchtigkeit von weniger als 50 %.

Unabhängig von der verwendeten Tempertechnik sollte das Temperausmaß ausreichen, um die Kristallinität und somit den Elastizitätsmodul des Polyvinylalkohols im Vergleich mit dem nicht behandelten Polyvinylalkoholausgangsmaterial zu erhöhen. Die optimale Menge des erforderlichen Temperns zur Erhöhung der Kristallinität auf das gewünschte Ausmaß variiert selbstverständlich bis zu einem gewissen Grade in Abhängigkeit von der Taktizität und der Molekulargewichtsverteilung des Polyvinylalkohols. Die optimale Kristallinitätsmenge jeglicher vorgegebenen Polyvinylalkoholmasse kann leicht bestimmt werden durch Variieren der Temperbedingungen, wie der Tempertemperatur und der Zeit beim thermischen Tempern und Auftragen des resultierenden Elastizitätsmoduls bzw. der Permeabilität für gelösten Sauerstoff gegen die Kristallinitätsmenge in der Gewichtsfraktion.

Gewöhnlich weist ein Polyvinylalkohol, der nicht durch eine spezielle Behandlung getempert wurde,

einen Kristallinitätsgrad unter 0,18 auf ; wobei der Kristallinitätsgrad als der Gewichtsanteil des in dem Gesamtgewicht des Polyvinylalkohols vorhandenen kristallinen Materials definiert ist. Nach dem Tempern weist der Polyvinylalkohol vorteilhaft einen Kristallinitätsgrad zwischen 0,195 und 0,7 vorzugsweise zwischen 0,22 und 0,60 und am bevorzugtesten zwischen 0,30 und 0,50 auf. Vorteilhaft weist das entsprechende, mit Wasser gequollene getemperte Material in im wesentlichen Abwesenheit eines Weichmachers einen Brechungsindex von etwa 1,360 bis 1,520, vorzugsweise zwischen etwa 1,365 und 1,490 und am bevorzugtesten von etwa 1,390 bis 1,465 auf. Ein übermäßiges Tempern, das zum Beispiel zu einem Kristallinitätsgrad von über 0,70 führt, ist unerwünscht, da die Sauerstoffpermeabilität wesentlich nachteilig beeinflußt wird. Darüberhinaus weisen derartige übermäßig getemperte Materialien auch wesentlich verringerte Quelleigenschaften auf, sowie einen Verlust an Flexibilität des gequollenen Produkts.

Anschließend an das Tempern kann der Polyvinylalkohol mit einem Quellmittel gequollen werden unter Bildung eines im wesentlichen die Form beibehaltenden Gels und gegebenenfalls in dem teilweise bis völlig gequollenen Zustand (d. h. dem Gleichgewichtsquellungszustand) mit einem chemischen Vernetzungsmittel in einer Menge vernetzt werden, um seinen Elastizitätsmodul weiter zu vergrößern, während die erforderliche optische Klarheit und eine ausreichende Durchlässigkeit für gelösten Sauerstoff der gequollenen fertigen Polyvinylalkohollinse zur Befriedigung des Sauerstoffbedarfs beibehalten werden. Brauchbare Vernetzungsmittel umfassen Formaldehyd, aliphatische oder aromatische Dialdehyde, wie Glutaraldehyd, Terephthalaldehyd, α,ω-Dialdehydpolyvinylalkohol und dergleichen ; aliphatische oder aromatische reaktive methylolierte Polyamine und methylolierte Polyamide, wie Dimethylolharnstoff, Dimethylolethylenharnstoff und Trimethylolmelamin ; Glyoxal ; Oxalsäure ; Polyacrolein ; Divinylverbindungen, wie Divinylsulfon und Verbindungen, die Vinylsulfonvorläufer als Endgruppen enthalten, wie β-Sulfatoethylsulfonyl und β-Hydroxyethylsulfonyl, sowie reaktive Derivate davon ; Triazinderivate, wie 2,4,6-Trichlor-1,3,5-triazin und Verbindungen, die chlorierte Triazinendgruppen enthalten, sowie reaktive Derivate davon ; polyhydroxylierte phenolische Verbindungen, wie Dihydroxydiphenylsulfon, Dihydroxybenzole, wie Resorcinal und Pyrogallol ; aliphatische und aromatische Polyepoxide, wie 1,2,3,4-Diepoxybutan und 1,2,7,8-Diepoxyoctan ; aliphatische und aromatische Diisocyanate, wie Ethylendiisocyanat, 1,2-Diisocyanatopropan, 1,3-Diisocyanatopropan, 2,4- und 2,6-Tolylendiisocyanat und Hexamethylendiisocyanat ; vierwertige Borate einschließlich Alkalimetall- und Erdalkalimetallborate, Ammoniumborate und Aminborate, wie Ammoniumborat, Calciumborat, Natriumborat und Natriumtetraborat und Methylammoniumhydrogentetraborat ; wässrige Lösungen von Borsäure, worin der pH-Wert auf größer als 7 eingestellt ist ; und vierwertige Metallsalze, einschließlich vierwertiger Metallsalze von Zirkonium, Vanadium, Titan und Chrom, wie Titansulfat, Zirkoniumchlorid, Vanadylsulfat, Chrom-III-nitrat und organische Titanate. Somit kann jegliches überliche, im wesentlichen nicht undurchsichtig machende chemische Vernetzungsmittel für Polyvinylalkohol, das zur Bildung von kovalenten Bindungen zwischen sich selbst und dem Polyvinylalkohol in einem geeigneten Quellungslösungsmittel geeignet ist, verwendet werden.

Geeignete Quellungslösungsmittel, die in Abhängigkeit von dem Vernetzungsmittel verwendet werden, umfassen Wasser, Glycerin, Ethylenglykol, Propylenglykol, Acetamid, Formamid, Ethanolacetamid, Dimethylacetamid, Ethanolformamid, Dimethylformamid, Dimethylsulfoxid, Ethanolamin, Diethylentriamin, Triethylendiamin, Triethylentetramin und Piperazin. Das gewählte Quellungslösungsmittel sollte im wesentlichen nicht reaktionsfähig mit dem gewählten Vernetzungsmittel sein, so daß es nicht in die Vernetzungsreaktion der gequollenen getemperten, im wesentlichen die Form beibehaltenden Polyvinylalkoholmasse eingreift.

Vorzugsweise wird der getemperte Polyvinylalkohol mit einer wässrigen Lösung eines Boratvernetzungsmittels bei einem pH-Wert von größer als 7 gequollen und behandelt.

Es ist ein kritisches Merkmal der vorliegenden Erfindung, daß jeglicher Vernetzungsvorgang an dem zumindest teilweise gequollenen Polyvinylalkohol anschließend an den Temperarbeitsgang durchgeführt wird.

Es wurde gefunden, daß die Temperstufe leicht steuerbar ist unter Erzielung des gewünschten Kristallinitätsgrads, wobei ein Produkt mit brauchbaren Sauerstoffpermeabilitätscharakteristika, die die Erfordernisse der menschlichen Cornea erfüllen, und günstigen Quellbarkeitscharakteristika erzielt wird, wenn der wahlfreie Vernetzungsarbeitsgang anschließend an die Temperstufe durchgeführt wird.

Wird jedoch der Polyvinylalkohol zuerst vernetzt und anschließend die Temperstufe durchgeführt, so ist das erzeugte Produkt nicht zufriedenstellend. Es wird angenommen, daß dies teilweise darauf beruht, daß das Vernetzungsmittel das Polymernetzwerk auf ein weniger flexibles Gitter einfriert und teilweise darauf, daß das Vernetzungsmittel die nicht unterbrochene Kettenlänge der Polyvinylalkoholstänge wirksam verringert. Man nimmt an, daß die relativ langen Kettenlängen des Polyvinylalkohols, gekuppelt mit seinem relativ mobilen Zustand auf Molekulargewichtsbasis zu der relativ leicht gesteuerten Bildung von Kristalliten während des Temperverfahrens beiträgt. Daher sind notwendigerweise kräftigere Bedingungen erforderlich, im die Kristallinität von vernetztem Polyvinylalkohol, falls dies überhaupt möglich ist, im Vergleich mit nicht vernetztem Polyvinylalkohol wesentlich zu vergrößern. Versucht man dementsprechend die Kristallinität von vernetztem Polyvinylalkohol zu vergrößern, so weist das resultierende getemperte Produkt mehrere nachteilige Charakteristika auf, einschließlich einer wesentlich beeinträchtigten Wasserretention oder Quellbarkeit, von wesentlich verringerten Sauerstoff permeabilität charakteristika, bis zu dem Ausmaß, daß ein ausreichend vorvernetztes und anschließend getempertes Material eine Sauerstoffpermeabilität aufweist, die nicht ausreicht, um den Erfordernissen der menschlichen Cornea zu entsprechen, und der Tendenz zu einer relativ schwachen mechanischen Festigkeit. Darüberhinaus ist aufgrund der extremeren Bedingungen, die zur Erzielung einer verstärkten Kristallinität erforderlich sind, die Temperstufe entsprechend weniger steuerbar.

Wird darüberhinaus mit einem chemischen Vernetzungsmittel vernetzt, so muß der Polyvinylalkohol zuerst gequollen sein und nach dem erfolgten Vernetzen zur Erzielung des Temperns getrocknet werden. Dies erfordert nich nur eine zusätzliche Quellstufe, sondern vergrößert auch die Wahrscheinlichkeit der Deformation, z. B. wenn der Polyvinylalkohol in der Form einer Kontaktlinsenkopie vorliegt. Auch neigt während des Temperns des getrockneten vernetzten Materials das vernetzte Polyvinylalkoholnetzwerk zum Kollabieren, was zu einer wesentlichen irreversiblen Verringerung der Quellung und Verringerung der Permeabilität für Sauerstoff führt.

Beim Vernetzen des Polyvinylalkohols im teilweise bis vollständig gequollenen Zustand mit einem chemischen Vernetzungsmittel anschließend an das Tempern, können zwischen etwa 0,001 und 10 Gew.-% Vernetzungsmittel, basierend auf dem Gewicht des vorhandenen Polyvinylalkohols, verwendet werden.

Das Vernetzen der getemperten gequollenen Polyvinylalkoholmasse neigt zum Einfrieren des resultierenden Polymernetzwerks an seiner Stelle, wodurch die mechanischen Eigenschaften des Produkts weiter verbessert werden.

Wird der getemperte Polyvinylalkohol mit einem Boratsalz in wässriger Lösung vernetzt, so ist die Natur des Kationrestes nicht kritisch. Aus Zweckmäßigkeitsgründen ist es jedoch bevorzugt, wenn das Kation ein pharmazeutisch brauchbares Kation ist. Dies räumt eine Waschstufe aus, bei der das vernetzte Material mit einer pharmazeutisch brauchbaren Base oder einem Salz gewaschen wird, um das unerwünschte Kation zu entfernen.

Ohne eine Einschränkung auf den genauen Reaktionsmechanismus vornehmen zu wollen, durch den eine Vernetzung des Polyvinylalkohols durch ein Borat bei einem pH-Wert über 7 erfolgt, wird angenommen, daß eine Didiol-Komplexbildung zwischen benachbarten Molekülen des Polyvinylalkohols erfolgt. Unter sauren Bedingungen, d. h. wenn der pH-Wert unter 7 liegt, wird angenommen, daß nur der nicht vernetzte Monodiolkomplex gebildet wird. So kann beispielsweise Borsäure zu Polyvinylalkohol gefügt werden, z. B. in einer Schmelzkstufe oder in wässriger Lösung zu dem Polyvinylalkohol vor dem Tempern und der nicht vernetzte Borsäure enthaltende Polyvinylalkohol kann getempert werden und anschließend durch Quellen mit einem geeigneten Quellungslösungsmittel, wie Wasser, zu dem dann eine Base gefügt wird, um die Polyvinylalkohol/Borsäure-Masse in das gequollene vernetzte Produkt umzuwandeln, vernetzt werden.

Wenn der getemperte Polyvinylalkohol mit einem Borat vernetzt werden soll, so sollte jeglicher reaktive Weichmacher, wie ein Polyolweichmacher einschließlich Propylenglykol, Ethylenglykol und Glycerin, vorteilhaft vor dem Vernetzen entfernt werden, z. B. durch Wäsche der getemperten Polyvinylalkoholmasse mit Wasser.

Die in dem vernetzten Polyvinylalkohol vorhandene Boratmenge, ausgedrückt als Milligramm komplexes Bor pro Gramm Polyvinylalkohol, liegt vorteilhaft zwischen 0,5 und 50, vorzugsweise zwischen 2 und 35 und am bevorzugtesten zwischen 5 und 25.

Die in dem vernetzten Polyvinylalkohol vorhandene Bormenge sollte ausreichen, um den Elastizitätsmodul des vernetzten Materials im Vergleich mit dem nicht vernetzten getemperten Polyvinylalkoholausgangsmaterial zu erhöhen. Die optimale vorhandene Menge an Bor, um den Elastizitätsmodul wesentlich zu erhöhen, variiert selbstverständlich bis zu einem gewissen Ausmaß in Abhängigkeit von der Molekulargewichtsverteilung und der Quellbarkeit des Polyvinylalkohols in Wasser. Die optimale Bormenge in einem vorgegebenen Polyvinylalkoholsubstrat kann leicht durch Variieren der vorhandenen Bormenge in getemperten Polyvinylalkoholproben und Auftragen des Verhältnisses von Bor in Milligramm zu Gramm Polyvinylalkohol gegen den Elastizitätsmodul in Kilogramm pro Quadratzentimeter bestimmt werden.

Ein wesentlicher Überschuß an vernetztem Bor oder anderem Vernetzungsmittel in dem Polyvinylalkoholsubstrat bis zu dem Ausmaß, daß er den Elastizitätsmodul des getemperten Polyvinylalkohols nachteilig beeinflussen kann, ist gewöhnlich unerwünscht.

Die getemperten Kontaktlinsen gemäß der Erfindung weisen eine höhere Sauerstoffpermeabilität im Vergleich mit beispielsweise Polyhydroxyethylmethacrylat auf.

In gleicher Weise ist die Zugfestigkeit der getemperten erfindungsgemäßen Kontaktlinsen der von Polyhydroxyethylmethacrylat weit überlegen.

Es ist wichtig, festzustellen, daß die Permeabilität für gelösten Sauerstoff, DK, eine allein dem Kontaktlinsenmaterial innewohnende Eigenschaft ist, wohingegen die Durchlässigkeit bzw. Transmissibilität für gelösten Sauerstoff, DK/L, den aktuellen Strom von Sauerstoff pro Differenzeinheit der Sauerstoffspannung (Partialdruck) über eine vorgegebene Linsendicke L beschreibt. Somit ist letztere wichtig zur Bestimmung der Fähigkeit einer speziellen Linse dem Sauerstoffbedarf der Cornea zu entsprechen. Im allgemeinen ist bei dem gleichen Linsenmaterial die Durchlässigkeit für gelösten Sauerstoff, DK/L, um so größer, je geringer die Linsendicke ist.

Als eine Folge der Kombination der sehr erwünschten Zugfestigkeit, des Elastizitätsmoduls und der hohen Sauerstoffpermeabilitätseigenschaften der erfindungsgemäßen Materialien können die resultierenden Kontaktlisen vorteilhaft entweder als ultradünne Kontaktlinsen mit einer extrem hohen Sauerstoffdurchlässigkeit, die über dem Sauerstoffbedarf der Cornea während kontinuierlichen Tragens liegt, wobei sie noch eine beträchtliche überlegene mechanische Festigkeit besitzen, hergestellt werden, z. B. mit einer Dicke zwischen 0,010 mm und 0,1 mm, oder alternativ als relativ dicke Linsen, die noch eine adäquate Sauerstoffdurchlässigkeit besitzen, z. B. mit einer Dicke zwischen 0,2 mm und 0,5 mm.

Außerdem macht die ausgezeichnete optische Klarheit der gegebenenfalls vernetzten, getemperten Polyvinylalkoholmaterialien diese besonders geeignet zur Verwendung als weiche Kontaktlinsen, um eine gute optische Schärfe und die notwendige Sichtkorrektur für die Patienten zu ergeben.

So können die vorliegenden Kontaktlinsen vorteilhaft eine Linsendicke von zwischen 0,010 mm und 0,5 mm aufweisen. Gewöhnlich weist aus Zweckmässigkeitsgründen die vorliegende Kontaktlinse vorzugsweise eine Dicke zwischen 0,03 und 0,25 mm auf. Der vorliegende Kontaktlinsendurchmesser kann im Bereich von 6 bis 20 mm, vorzugsweise von 8 bis 16 mm liegen.

Die vorliegenden getemperten Polyvinylalkoholmaterialien weisen auch überlegene Dehnungscharakteristika und Elastizitätsmodulen im Vergleich mit Polyhydroxyethylmethacrylat auf.

Die getemperten Polyvinylalkoholmaterialien besitzen eine verbesserte Beständigkeit gegen die viskoelastische Deformation im Vergleich mit dem nicht getemperten Polyvinylalkohol und sind daher im wesentlichen frei von dem sogenannten « Kaltfluß » oder den Kriechphänomenen, die gewöhnlich bei amorphen thermoplastischen Linsenmaterialien auftreten. Dementsprechend sind sie beständig gegen permanente und beträchtliche Deformation, die gelegentlich bei der Bewegung des Augenlides oder bei der Reinigung der Linse auftritt.

Die getemperten Polyvinylalkohol-Kontaktlinsen enthalten in ihrem gequollenem Verwendungszustand 30 bis 90 Gew.-% Wasser, basierend auf dem Gewicht des gequollenen Materials, vorzugsweise 45 bis 85 Gew.-% Wasser.

Die vorliegenden Kontaktlinsen können vorteilhaft nach verschiedenen Methoden hergestellt werden.

Bei einer Methode, der Methode A, wird die Kontaktlinse nach folgenden Stufen hergestellt :

a) Bilden eines Linsenrohlings aus einem im wesentlichen nicht vernetzten Polyvinylalkoholharz mit einem gewichtsmittleren Molekulargewicht von mindestens 6 000 in Anwesenheit oder Abwesenheit eines Polyvinylalkohol-Weichmachers ;

b) Tempern dieses Linsenrohlings unter die Kristallinität fördernden Bedingungen zur wirksamen Vergrößerung des Elastizitätsmoduls der anschließend gequollenen Kontaktlinse, derart, daß der resultierende getemperte Polyvinylalkoholrohling einen Kristallinitätsgrad zwischen 0,195 und 0,70, definiert als der Gewichtsanteil des in dem Polyvinylalkoholpolymeren vorhandenen kristallinen Materials, aufweist ;

c) Entfernen ausgewählter Anteile von dem getemperten Rohling, bis der Rest des getemperten Rohlings eine Kopie der Kontaktlinse in verkleinertem Maßstab bildet ; und

d) Quellen dieser getemperten Kopie in einem Quellungslösungsmittel in Abwesenheit, oder, falls Vernetzung erwünscht ist, in Anwesenheit eines chemischen Vernetzungsmittels unter Erzielung der im wesentlichen die Form beibehaltenden gequollenen Kontaktlinse.

In einer alternativen Methode, der Methode B, wird die Kontaktlinse durch folgende Stufen hergestellt :

a) Bildung einer Kopie einer Kontaktlinse im verkleinerten Maßstab in der Form eines im wesentlichen nicht vernetzten die Form beibehaltenden Polyvinylalkoholharzes mit einem gewichtsmittleren Molekulargewicht von mindestens 6 000 in Anwesenheit oder Abwesenheit eines Polyvinylalkoholweichmachers ;

b) Tempern dieser Kontaktlinsenkopie unter kristallinitätsfördernden Bedingungen zur wirksamen Erhöhung des Elastizitätsmodul der anschließend gequollenen Kontaktlinse, derart, daß die getemperte Kontaktlinsenkopie einen Kristallinitätsgrad zwischen 0,195 und 0,70, definiert als der Gewichtsanteil des in dem Polyvinylalkoholpolymeren vorhandenen kristallinen Materials aufweist ; und

c) Quellen dieser getemperten Kopie in einem Quellungslösungsmittel in Abwesenheit oder, falls Vernetzung erwünscht ist, in Anwesenheit eines chemischen Vernetzungsmittels, zur Erzielung einer im wesentlichen die Form beibehaltenden gequollenen Kontaktlinse.

Vorzugsweise ist die gegebenenfalls vorhandene Weichmachermenge in einer Menge zwischen 0.01 und 30 Gew.-%, basierend auf dem Gesamtgewicht von Weichmacher und Polyvinylalkohol, vorhanden ; bevorzugter zwischen 0,01 und 15 Gew.-% in den Methoden A und B.

Bevorzugte Weichmacher umfassen Polyole, wie Ethylenglykol, Propylenglykol, Glycerin und Ethylenglykol -mono- und -dimethylether, Tetrahydrofuran, Formamid, Dimethylacetamid, Dimethylformamid und Dimethylsulfoxid.

Am bevorzugtesten ist der Weichmacher Glycerin oder Propylenglykol.

Bei jeder der Methoden A oder B kann Borsäure in den Polyvinylalkohol von deren Stufe a) eingearbeitet werden. So kann beispielsweise der Linsenrohling der Stufe a) bei der Methode A

hergestellt werden durch Gießen einer wässrigen Lösung des Polyvinylalkohols und von Borsäure zu einem Film mit einer Dicke, die größer ist als diese Linsenkopie, oder durch Zusatz von Borsäure zu geschmolzenem Polyvinylalkohol und Verfestigen des resultierenden flüssigen Gemischs in der Form eines Linsenrohlings. Die Linsenkopie der Stufe a) in der Methode B kann in gleicher Weise Borsäure gelöst oder darin dispergiert enthalten. Da die Borsäure nicht in dem erforderlichen vierwertigen Zustand vorliegt, tritt keine Vernetzung bis zur anschließenden Quellungsstufe ein, bei der die Vernetzung durch Behandeln mit einer wässrigen Lösung mit einem pH-Wert von größer als 7 bewirkt wird.

Auch wenn ein Polyolweichmacher in das Ausgangsmaterial der Stufe a) der Methode A oder B eingearbeitet wird und das Vernetzungsmittel ein vierwertiges Metallsalz oder dergleichen ist, das zur Reaktion mit dem Weichmacher geeignet ist, wird der Weichmacher entfernt, zum Beispiel durch Wäsche mit einem wässrigen Lösungsmittel, vor der Vernetzungsreaktion.

Bei der Methode A kann das Linsenrohling-Ausgangsmaterial der Stufe a) nach verschiedenen an sich bekannten Techniken geformt werden. So kann der Linsenrohling aus geeigneten Stäben geschnitten, aus Polyvinylalkoholfolien gestanzt oder geprägt oder aus Formen, wie durch Schmelzstrangpressen und dergleichen, gegossen werden.

In Methode B kann das Kontaktlinsenkopieausgangsmaterial in der Stufe a) in gleicher Weise nach verschiedenen an sich bekannten Techniken geformt werden. Beispielsweise können geeignete Linsenkopien geformt werden durch Drehen oder Schneiden eines festen vernetzten Polyvinylalkohollinsen-Rohlings oder dergleichen ; oder durch Formen bzw. Preßformen in einer geeigneten Form im geschmolzenen Zustand in Anwesenheit eines Weichmachers ; durch Spinntrocknung einer wässrigen oder wässrigen/Weichmacherlösung von Polyvinylalkohol in einer Form bzw. Preßform, analog bekannten Spinngießtechniken ; oder durch Preßformung einer gegebenenfalls weichgemachten Polyvinylalkoholfolie.

Wie für den Fachmann ersichtlich, kann unter kristallinitätsfördernden Bedingungen die Stufe b) der Methode B entweder gleichzeitig mit der und/oder anschließend an die Bildung der Linsenkopiebildung der Stufe a) erfolgen. Beispielsweise kann bei der Spinntrocknung das Linsenkopie-Polyvinylalkoholpolymere in der Spinnform unter erhöhten Temperaturbedingungen und/oder durch gesteuerte Trocknung, wie in dem vorstehenden Artikel von A. Packter und M. S. Nerurkar angegeben, und/oder durch Druckanwendung auf das System, getempert werden. Auch kann unter Druckformung der Linsenkopie in einer geeigneten Form die Kombination von Druck und erhöhter Temperatur während einer Zeit, die ausreicht, um die Kristallinität in der Kopie wesentlich zu erhöhen, angewendet werden, um die gewünschte getemperte Linsenkopie gleichzeitig mit ihrer Bildung zu erzielen. Alternativ können die Stufen der Linsenkopie-Bildung und von deren Tempern unter kristallisationsfördernden Bedingungen aufeinanderfolgenderfolgen, wobei zuerst die Linsenkopie gebildet und diese dann getempert wird.

Die erfindungsgemäße Linse kann gegebenenfalls mit geeigneten Farbstoffen und Pigmenten zu kosmetischen Zwecken oder zur Abschirmung von Ultraviolettlicht, oder für Identifizierungszwecke nach auf dem Fachgebiet an sich bekannten Methoden getönt werden. Gemäß einer Ausführungsform kann das Vernetzungsmittel selbst ein Chromophor sein oder einen Chromophor unter den Vernetzungsbedingungen bilden. Beispielsweise ergibt mit Vanadylsulfat vernetzter Polyvinylalkohol eine hellblau getönte optisch klare Kontaktlinse im gequollenen Zustand. Auch kann ein organischer Farbstoff mit zwei reaktiven Gruppen, der geeignet ist, einen kovalent vernetzten Polyvinylalkohol zu bilden, zur Bildung der getönten Linse verwendet werden. Alternativ ist das färbende Material ein Pigment, Dispersionsfarbstoff oder Faserreaktivfarbstoff, wie in EP-A-0072353 beschrieben.

Es versteht sich, daß sphärische, torische und polyfokale Linsen zur Anwendung im menschlichen Auge, einschließlich bifokaler Kontaktlinsen mit Stärken, die die Bereiche von etwa —20 bis etwa +20 Dioptrien abdecken, vorteilhaft nach den Methoden A und B, die vorstehend beschrieben wurden, hergestellt werden können. So kann beispielsweise die gesamte konvexe Oberfläche der Kopien in den Methoden A und B planare oder konkave Regionen umfassen, wenn eine gesamte negative Dioptrie oder mehrfache Dioptrien gewünscht werden.

Es versteht sich darüberhinaus, daß die vorliegenden Polyvinylalkohollinsen unter Anwendungsbedingungen mit wässriger Tränenflüssigkeit gequollen werden und dies wird in Betracht gezogen, wenn die Konfiguration der getemperten Linsenkopie bestimmt wird. Dementsprechend wird die Konfiguration der getemperten Linsenkopie, basierend auf dem Quellausmaß, berechnet, das anschließend an die Linsenkopierstufe erfolgt, z. B. bei der anschließenden wässrigen Behandlung, wie in dem wässrigen Medium oder in dem wässrigen oder organischen Medium, in dem gegebenenfalls die Vernetzung erfolgt. Da die gequollene Linse im wesentlichen eine gleichmäßige Polyvinylalkohol-Dichte aufweist, ist diese Berechnung direkt und hängt von dem Prozentgehalt an Wasser, das in der Kontaktlinse in ihrem gequollenen Verwendungszustand vorliegt, im Vergleich mit der Wassermenge, die in der Linse vor dem Quellen vorhanden ist, ab.

Die erfindungsgemäße Kontaktlinse kann vorteilhaft für den Transport in einer isotonischen Lösung mit einem pH-Wert von etwa 7 oder gegebenenfalls in einer wässrigen Boratlösung gelagert werden. Durch die Erfindung werden weiche Kontaktlinsen bereitgestellt, die Polyvinylalkohol enthalten, der unter kristallinitätsfördernden Bedingungen derart getempert wurde, dass die getemperten wässrigen gequollenen Linsen im wesentlichen in der Augentränenumgebung unlöslich sind, einen hohen Wassergehalt aufweisen, eine Sauerstoffdurchlässigkeit besitzen, die über der liegt, die notwendig ist, um den

Erfordernissen der menschlichen Cornea zu entsprechen, eine verbesserte Heisswasserbeständigkeit und überlegene mechanische Eigenschaften aufweisen, wobei die Kontaktlinsen durch ein einfaches kostengünstiges Verfahren hergestellt werden können.

Die folgenden Beispiele sollen nur veranschaulichen und die Natur oder den Rahmen der Erfindung nicht beschränken. Alle Teile beziehen sich, falls nicht anders angegeben, auf das Gewicht.

Die Beispiele 1-21 veranschaulichen Herstellungsmethoden für das erfindungsgemäße weiche Kontaktlinsensystem.

Beispiel 1

Ein Polyvinylalkoholfilm von 0,038 cm Trockendicke mit einem Gehalt von 3,4 % Glycerin als Weichmacher wurde mit einer Rakel aus einer 18 % wässrigen Lösung von ELVANOL 71-30 (99-100 Mol-% hydrolysierter Polyvinylalkohol mit gewichtsmittleren und zahlenmittleren Molekulargewichten von 116 000 bzw. 40 000, hergestellt von DuPont), mit einem ursprünglichen Gehalt von 0,6 % Glycerin gegossen und anschließend 2 Tage bei 23 °C und 40 % relativer Feuchtigkeit getrocknet. Der getrocknete Film enthielt Restwasser von weniger als 5 %.

Der so gebildete transparente und thermoplastische Polyvinylalkoholfilm wurde bei etwa 413-689 kPa auf einer Laboratoriumspresse während eines Zeitraums von etwa 10 Sekunden bei 180 °C zwischen den beiden Formteilen einer Form in Form einer Linsenkopie zu deren Formung und Tempern gepreßt. Der konkave Teil der Form wies einen Kurvenradius von 0,6 cm auf und der konvexe Paßteil wies einen Kurvenradius von 0,635 cm auf. Die gesamte Form wurde auf 180 °C vor der Druckformung vorgeheizt. So wurde ein getemperter linsenkopieförmiger Gegenstand gebildet und aus dem Film abgetrennt. Die gebildete Linse wurde anschließend aus der Form entnommen und auf Raumtemperatur gekühlt.

Anschließend wurde die gebildete Linse in destilliertem Wasser über Nacht gewaschen, um restliches Glycerin zu entfernen und die Linse auf ihren endgültigen Verwendungszustand zu quellen. Die gequollene Linse wurde anschliessend in isotonischer Salzlösung gelagert. Die so gebildete Linse war weich, elastisch, optisch klar und im wesentlichen beständig gegen Tränen und viskoelastische Deformation mit einem Gleichgewichtswassergehalt von 47,33 Gew.-%.

Beispiel 2

Es wurden zwei druckgeformte Polyvinylalkohollinsen, die 50 % und 70 % Glycerin als Weichmacher enthielten, wie im Beispiel 1 beschrieben hergestellt, wobei jedoch in beiden Fällen eine Formungstemperatur von 158 °C verwendet wurde.

Anschließend wurden die geformten getemperten Linsenkopien in destilliertem Wasser über Nacht gewaschen und gequollen, wobei das restliche Glycerin entfernt wurde, worauf in einer isotonischen Salzlösung gelagert wurde. Die so gebildeten Linsen waren weich, federnd, optisch klar und im wesentlichen beständig gegen Tränen und viskoelastische Deformation. Die Zusammensetzungen der Linsen wurden auf ihre Permeabilitäten für gelösten Sauerstoff bei 34 °C, der Augentemperatur, unter Verwendung eines polarographischen Sensors in einer mit Luft gesättigten wässrigen Umgebung untersucht. Die Untersuchungsergebnisse einschließlich der Gleichgewichtswassergehaltwerte sind in der Tabelle 1 angegeben.

Tabelle 1

| Beispiel Nr. | Glyceringehalt (%) | Gleichgewicht Wassergehalt (%) | Permeabilität für gelösten Sauerstoff bei 34 °C $x10^{-10} \frac{cm^3 (STP) cm}{cm^2 sec cmHg}$ |
|---|---|---|---|
| 2A | 50 | 47,7 | 14,47 |
| 2B | 70 | 53,6 | 22,98 |

Beispiel 3

Eine 10 % wässrige Polyvinylalkohollösung mit einem Gehalt von 0,34 % Glycerin wurde hergestellt durch Auflösen geeigneter Mengen von Elvanol 71-30 und Glycerin in Wasser bei 100 °C. Die resultierende Lösung wies eine Brookfield-Viskosität von etwa 1 500 mPa · s bei Raumtemperatur (23 °C) auf.

Etwa 40 mg dieser Lösung wurden in eine Glasform mit einer sphärischen konkaven festen,

tragenden Oberfläche mit einem Kurvenradius von 0,5 cm beschickt. Die Form mit einer Segmenthöhe von 0,4 cm wurde anschließend an eine Klemmvorrichtung befestigt und um die Achse, transversal zur tragenden Oberfläche, mit 350 Umdrehungen/Minute unter Anwendung eines Motors mit variabler Geschwindigkeit, rotiert. Ein derartiges Drehverfahren formte nicht nur die Linse durch die Zentrifugalkraft, sondern erzeugte auch eine Konvektion von Umgebungsluft, um die Trocknung dieser Linse zu erleichtern. Nach 4-stündigem Trocknen bei 350 Upm, 23 °C und 40 % relativer Feuchtigkeit, war die geformte Linsenkopie grifftrocken.

Anschließend wurde die trockene Linse zusammen mit der Form in einem Ofen bei 100 °C während 1 Stunde getempert. Schließlich wurde die getemperte Linsenkopie aus der Form entnommen und in destilliertem Wasser über Nacht gewaschen, um restliches Glycerin zu entfernen und die Linse auf den endgültigen Verwendungszustand zu quellen. Die gequollene Linse wurde anschließend in isotonischer Salzlösung gelagert. Die so gebildete Linse war weich, federnd, optisch klar und im wesentlichen beständig gegen Tränen und viskoelastische Deformation, bei einem Gleichgewichtswassergehalt von 67,26 Gew.-%.

Beispiele 4-9

Einige thermisch getemperte Polyvinylalkohollinsen wurden wie im Beispiel 3 beschrieben hergestellt. Die gequollenen Linsen, die frei von Glycerin gewaschen waren, wurden anschließend in Natriumboratlösungen mit Konzentrationen bis zu 4 % ausgeglichen, um einen Bereich der gewünschten inneren Boratvernetzungskonzentrationen zu erzielen. Die Zusammensetzung jeder Linse wurde auf ihre Permeabilität für gelösten Sauerstoff bei 34 °C, der Augentemperatur, unter Verwendung eines polarographischen Sensors in einer mit Luft gesättigten wässrigen Umgebung untersucht. Die mechanischen Eigenschaften der Linsenzusammensetzung, einschließlich der Zugfestigkeit, der Bruchdehnung, und des Elastizitätsmoduls wurden auf einem Instrontester, Modell 1123, bestimmt. Diese Testergebnisse sind in der Tabelle 2 summarisch aufgeführt.

(Siehe Tabelle 2 Seite 10 f.)

Tabelle 2

| Beispiel Nr. | innere Borkonzentration in trockenem PVA[2] (mg/g) | Wassergehalt[3] (%) | Permeabilität für gelösten Sauerstoff bei 34°C $x10^{-10} \frac{cm^3\ (STP)\ cm}{cm^2\ sec.cmHg}$ | Zugfestigkeit ($N/cm^2$) | Bruchdehnung (%) | Elastizitätsmodul ($N/cm^2$) |
|---|---|---|---|---|---|---|
| 4 | 0 | 67,26 | 32,5 | 109,4 | 484,5 | 12,5 |
| 5 | 6,13 | 70,80 | 33,5 | 118,8 | 506,5 | 14,4 |
| 6 | 10,90 | 75,35 | 38,2 | 110,3 | 524 | 12,8 |
| 7 | 19,81 | 75,63 | 30,6 | 87,7 | 442,5 | 10,7 |
| 8 | 36,39 | 82,29 | -- | 31,3 | 213,3 | 8,7 |
| 9 | Poly-HEMA[1] (Kontrolle) | 35,88 | 10,28 | 1,1 | 40 | 3,7 |

[1] Poly-(2-hydroxyethylmethacrylat) vernetzt mit Ethylenglykoldimethacrylat
[2] Polyvinylalkohol
[3] beim Gleichgewicht

Die Ergebnisse der in der Tabelle 2 gezeigten Untersuchungen veranschaulichen die zusätzliche Zunahme der Zugfestigkeit und Bruchdehnung, sowie des Elastizitätsmoduls, gekuppelt mit einer hohen Permeabilität für gelösten Sauerstoff, die erzielt wurden durch Vernetzen der zuerst thermisch getemperten Polyvinylalkoholkontaktlinsenmaterialien, insbesondere im Vergleich mit einem üblichen Poly-HEMA-Kontaktlinsenmaterial.

Beispiele 10-16

Eine Reihe thermisch getemperter Polyvinylalkohollinsen wurde wie in Beispiel 3 beschrieben hergestellt, wobei jedoch kein Glycerin zu der Gießlösung gefügt wurde und Tempertemperaturen bis zu 125 °C angewendet wurden, um einen Kristallinitäts- und Wasserquellbereich zu erzielen. Die Kristallinität (Gewichtsfraktion des kristallinen Gebiets) jeder Linsenzusammensetzung wurde aus ihrer Trockendichte bewertet. Die Dichte wurde gemessen durch Wiegen der Proben an der Luft und in Heptan bei 23 °C. Die Zusammensetzung jeder Linse wurde auch auf ihre Permeabilität für gelösten Sauerstoff und die naßmechanischen Eigenschaften, gemäß den Verfahrensweisen und Bedingungen, die in den Beispielen 4 bis 9 angegeben sind, untersucht. Die Untersuchungsergebnisse sind in der Tabelle 3 summarisch dargestellt.

(Siehe Tabelle 3 Seite 12 f.)

Tabelle 3

| Beispiel Nr. | Temperbedingungen | Kristallinität (%) | Gleichgewichtswassergehalt (%) | Permeabilität für gelösten Sauerstoff bei 34°C $x10^{-10} \frac{cm^3 (STP) cm}{cm^2 sec.cmHg}$ | Zugfestigkeit ($N/cm^2$) | Bruchdehnung (%) | Elastizitätsmodul ($N/cm^2$) |
|---|---|---|---|---|---|---|---|
| 10 | Trocknen bei 23°C | 16,44 | 82,72 | 44,71 | 8,1 | 240 | 2,3 |
| 11 | 50°C, 1 h | 19,40 | 80,43 | 54,59 | 7,1 | 215,8 | 2,8 |
| 12 | 75°C, 1 h | 38,40 | 80,16 | 35,20 | 58,3 | 364 | 5,1 |
| 13 | 100°C, 5 h | 35,51 | 71,81 | 34,38 | 70,5 | 433,5 | 7,8 |
| 14 | 100°C, 1 h | 38,40 | 69,50 | 31,84 | 88,3 | 417 | 11,9 |
| 15 | 100°C, 2 h | 36,96 | 71,51 | 31,75 | 79,8 | 435 | 11 |
| 16 | 125°C, 0,5h | 41,29 | 67,53 | 32,46 | 100,3 | 416,7 | 13,7 |
| 9 | Poly-HEMA[1] (Kontrolle) | -- | 35,88 | 10,28 | 1,1 | 40 | 3,7 |

[1] Poly-(2-hydroxyethylmethacrylat) vernetzt mit Ethylenglykoldimethacrylat

Die Ergebnisse der in der Tabelle 3 gezeigten Untersuchungen veranschaulichen die vorteilhafte Zunahme der Zugfestigkeit, Bruchdehnung und des Elastizitätsmoduls, gepaart mit einer hohen Permeabilität für gelösten Sauerstoff, erzielt durch die vorliegenden thermisch getemperten Polyvinylalkohol-Kontaktlinsenmaterialien, insbesondere im Vergleich mit einem üblichen Poly-HEMA-Kontaktlinsenmaterial.

Beispiel 17

Eine thermisch getemperte Polyvinylalkohollinse wurde wie in Beispiel 3 beschrieben hergestellt, wobei jedoch kein Glycerin zu der Gießlösung gefügt wurde und das Tempern eine Stunde bei 75 °C durchgeführt wurde. Die gequollene Linse wurde anschließend ausgeglichen in einer 0,5 % Vanadylsulfatlösung mit einem 5 : 1 Lösung-zu-Polymer-Verhältnis, um die gewünschte Vernetzung durch Komplexbildung zu erzielen. Die so gebildete Linse war weich, federnd, optisch klar mit blauem Farbton, und im wesentlichen beständig-gegen Tränen und viskoelastische Deformation. Eine derartige Linsenzusammensetzung zeigt eine Permeabilität für gelösten Sauerstoff von $55{,}52 \times 10^{-10}$ [$cm^3$ (STP) $cm/cm^2$ sec · cmHg] bei 34 °C, eine Zugfestigkeit von 30,4 $N/cm^2$, eine Bruchdehnung von 296,5 % und einen Elastizitätsmodul von 6,8 $N/cm^2$.

Beispiele 18-21

Vier druckgeformte Polyvinylalkohol-Planolinsen, enthaltend 12,5 % Glycerin als Weichmacher, mit einem Durchmesser von 13 mm und einer Dicke von 0,115 mm wurden nach der im Beispiel 1 beschriebenen Methode hergestellt. Nach dem Waschen und Quellen in destilliertem Wasser, um restliches Glycerin zu entfernen, wurden diese Linsen auf beiden Seiten getönt durch Reaktion jeder gequollenen Linse in einem wässrigen Gemisch von 1 ml einer geeigneten Reaktivfarbstoff-Lagerlösung und 5 ml einer 10 % Lösung von Natriumphosphat, dreibasischem Dodecahydrat, bei Raumtemperatur (25 °C) während 1 Stunde. Anschließend wurden die getönten Linsen in destilliertem Wasser gewaschen, um die restlichen Reaktionskomponenten zu entfernen und schließlich wurden sie in einer gepufferten isotonischen Salzlösung vom pH-Wert 7,4 gelagert. Die hier verwendeten Reaktivfarbstoffe wurden unter dem Handelsnamen REMAZOL (Am. Hoechst Co.) erhalten. Sie weisen folgende allgemeine Formel auf.

$$\text{Farbstoff}—SO_2—CH_2—CH_2—O—SO_3N_a$$

Die Färbereaktion tritt im allgemeinen an der ß-Sulfatoethylsulfonylgruppe auf, die ein Vinylsulfonvorläufer ist.

Die so erhaltenen getönten Linsen zeigen eine permanente Farbbeständigkeit ohne extrahierbare Anteile. Die verwendeten Farbstofflagerlösungen und die resultierende Lichtabsorptionsfähigkeit der getönten Linsen sind in der Tabelle 4 aufgeführt.

Tabelle 4

| Beispiel Nr. | getönte Farbe | Farbstofflagerlösung (wässrig) | Absorptionsfähigkeit (Wellenlänge) |
|---|---|---|---|
| | | 0,54% Remazol schwarz B | 1,1 (600nm) |
| 18 | grün | +0,54% Remazol gelb GI | 0,88(420nm) |
| 19 | bernstein | 2 % Remazol gold-orange 36G | 0,37(485nm) |
| 20 | aquamarin | 2,5 % Remazol türkis P | 0,67(675nm) |
| 21 | blau | 0,25% Remazol schwarz B | 0,54(610nm) |

**Patentansprüche**

1. Weiche Kontaktlinse aus festem Polyvinylalkohol, dadurch gekennzeichnet, dass der Polyvinylalkohol ein gewichtsmittleres Molekulargewicht von mindestens 6 000 aufweist, und dass die Kontaktlinse unter kristallinitätsfördernden Bedingungen auf einen Kristallinitätsgrad von 0,195 bis 0,7 getempert und in einem Quellungslösungsmittel gequollen wurde.

2. Kontaktlinse nach Anspruch 1, die mit einem vierwertigen Metallsalz oder einem organischen

polyfunktionellen Vernetzungsmittel mässig vernetzt ist.

3. Kontaktlinse nach Anspruch 1, in der der Polyvinylalkohol ein gewichtsmittleres Molekulargewicht von 10 000 bis 1 000 000 aufweist.

4. Kontaktlinse nach Anspruch 1, in der der Polyvinylalkohol weniger als 1 Mol-% Polyvinylacetateinheiten enthält.

5. Kontaktlinse nach Anspruch 1, in der der Polyvinylalkohol von solcher Art ist, dass er in seiner Form vor dem Tempern im wesentlichen in Wasser bis zu 50 °C unlöslich ist.

6. Kontaktlinse nach Anspruch 2, in der das Vernetzungsmittel ein Borat ist.

7. Kontaktlinse nach Anspruch 6, in der die Milligramm an Bor pro Gramm Polyvinylalkohol bei 0.5 bis 50 liegen.

8. Kontaktlinse nach Anspruch 1, mit einer maximalen Linsendicke zwischen 0,010 mm und 0.5 mm und einem Linsendurchmesser zwischen 6 mm und 20 mm.

9. Kontaktlinse nach Anspruch 1, enthaltend in ihrem gequollenen Verwendungszustand zwischen 30 und 90 % Wasser, basierend auf dem Gewicht der gequollenen Linse.

10. Kontaklinse nach Anspruch 1, die mit einem Frabstoff oder Pigment getönt ist.

11. Verfahren zur Herstellung einer weichen Kontaktlinse nach Anspruch 1, gekennzeichnet durch folgende Schritte :

a) Bilden eines Linsenrohlings oder einer Kopie einer Kontaktlinse in einem verkleinerten Massstab aus einem im wesentlichen nicht vernetzten Polyvinylalkoholharz mit einem gewichtsmittleren Molekulargewicht von mindestens 6 000,

b) Tempern dieses Linsenrohlings oder dieser Linsenkopie unter kristallinitätsfördernden Bedingungen, um den Elastizitätsmodul der anschliessend gequollenen Kontqktlinse wirksam zu erhöhen, derart, dass der resultierende getemperte Polyvinylalkohol einen Kristallinitätsgrad zwischen 0.195 und 0,70, definiert als der Gewichtsanteil des in dem Polyvinylalkoholpolymeren vorhandenen kristallinen Materials, aufweist,

c) Entfernen von ausgewählten Anteilen dieses getemperten Linsenrohlings, falls von einem Rohling ausgegangen worden war, bis der Rest des getemperten Rohlings eine Kopie dieser Kontaklinse in einem veringerten Massstab bildet ; und

d) Quellen dieser getemperten Kopie in einem Quellungslösungsmittel in Abwesenheit oder, falls Vernetzung erwünscht ist, in Anwesenheit eines chemischen Vernetzungsmittels, zur Erzielung einer im wesentlichen formhaltenden gequollenen Kontaktlinse.

12. Verfahren nach Anspruch 11, bei dem der Schritt a) in Anwesenheit von 0,01 bis 70 Gew.-% Weichmacher, basierend auf dem Gesamtgewicht von Weichmacher und Polyvinylalkohol, durchgeführt wird.

13. Verfahren nach Anspruch 12, bei dem zwischen 0,01 und 30 Gew.-% Weichmacher, basierend auf dem Gesamtgewicht von Weichmacher und Polyvinylalkohol, verwendet werden.

14. Verfahren nach Anspruch 11, bei dem der Weichmacher Glycerin oder Propylenglykol ist.

15. Verfahren nach Anspruch 11, bei dem die Temperstufe b) unter thermischen Temperbedingungen zwischen 45 °C und 200 °C in Anwesenheit von weniger als 20 Gew.-% Wasser durchgeführt wird.

**Claims**

1. A soft contact lens of solid polyvinyl alcohol, characterised in that the polyvinyl alcohol has a weight average molecular weight of at least 6,000, and that the contact lens has been annealed under crystallinity promoting conditions to a crystallinity degree in the range from 0.195 to 0.7 and swollen in a swelling solvent.

2. A contact lens according to claim 1, which lens is sparingly crosslinked with a tetravalent metal salt or an organic polyfunctional crosslinking agent.

3. A contact lens according to claim 1, wherein the polyvinyl alcohol has a weight average molecular weight in the range from 10,000 to 1,000,000.

4. A contact lens according to claim 1, wherein the polyvinyl alcohol contains less than 1 mole% of polyvinyl acetate units.

5. A contact lens according to claim 1, wherein the polyvonyl alcohol is of such a type that in its pre-annealed form it is substantially insoluble in water up to 50 °C.

6. A contact lens according to claim 2, wherein the crosslinking agent is a borate.

7. A contact lens according to claim 6, wherein the number of milligrams of boron per gram of polyvinyl alcohol is from 0.5 to 50.

8. A contact lens according to claim 1, possessing a maximum lens thickness of 0.010 mm to 0.5 mm and a lens diameter of 6 mm to 20 mm.

9. A contact lens according to claim 1, containing in its swollen use condition 30 to 90 % of water, based on the weight of swollen lens.

10. A contact lens according to claim 1 which has been tinted with a dye or pigment.

11. A process for preparing a soft contact lens according to claim 1, comprising the following steps :

a) forming a lens blank or a replica of a contact lens on a reduced scale from a substantially non-

crosslinked polyvinyl alcohol resin having a weight average molecular weight of at least 6,000 ;

b) annealing said lens blank or said lens replica under crystallinity promoting conditions to increase effectively the elastic modulus of the subsequently swollen contact lens, such that the resultant annealed polyvinyl alcohol has a degree of crystallinity in the range from 0.195 to 0.70, defined as the weight fraction of crystalline material present in the polyvinyl alcohol polymer ;

c) removing selected portions of said annealed lens blank, if a start was made from a blank, until the remainder of the annealed blank constitutes a replica of said contact lens on a reduced scale ; and

d) swelling said annealed replica in a swelling solvent, in the absence or, if crosslinking is desired, in the presence of a chemical crosslinking agent, to obtain a substantially shape-retaining swollen contact lens.

12. A process according to claim 11, wherein step a) is conducted in the presence of 0.01 to 70 % by weight of plasticizer, based on the total weight of plasticizer and polyvinyl alcohol.

13. A process according to claim 12, which comprises the use of 0.01 to 30 % by weight of plasticizer, based on the total weight of plasticizer and polyvinyl alcohol.

14. A process according to claim 11, wherein the plasticizer is glycerol or propylene glycol.

15. A process according to claim 11, wherein the annealing step b) is conducted under thermal annealing conditions in the temperature range from 45 ° C to 200 ° C, in the presence of less than 20 % by weight of water.

## Revendications

1. Lentille de contact molle en alcool polyvinylique solide, caractérisée en ce que l'alcool polyvinylique présente un poids moléculaire moyen, moyenne en poids, d'au moins 6 000 et en ce que la lentille de contact a été recuite dans des conditions activant la cristallinité jusqu'à un degré de cristallinité de 0,195 à 0,7 et soumise à gonflement dans un solvant de gonflement.

2. Lentille de contact selon la revendication 1, réticulée modérément par un sel métallique tétravalent ou par un agent réticulant organique polyfonctionnel.

3. Lentille de contact selon la revendication 1, dans laquelle l'alcool polyvinylique a un poids moléculaire moyen, moyenne en poids, de 10 000 à 1 000 000.

4. Lentille de contact selon la revendication 1, dans laquelle l'alcool polyvinylique contient moins de de 1 mole% de motifs d'acétate de polyvinyle.

5. Lentille de contact selon la revendication 1, dans laquelle l'alcool polyvinylique est d'une nature telle que, dans l'état où il se trouve avant le recuit, il est essentiellement insoluble dans l'eau jusqu'à des températures de 50 ° C.

6. Lentille de contact selon la revendication 2, dans laquelle l'agent réticulant est un borate.

7. Lentille de contact selon la revendication 6, contenant de 0,5 à 50 mg de bore par gramme d'alcool polyvinylique.

8. Lentille de contact selon la revendication 1, ayant une épaisseur maximale de 0,010 mm à 0,5 mm et un diamètre de 6 mm à 20 mm.

9. Lentille de contact selon la revendication 1, contenant, à l'état gonflé correspondant à l'utilisation, de 30 à 90 % d'eau, par rapport au poids de la lentille gonflée.

10. Lentille de contact selon la revendication 1, colorée à l'aide d'un colorant ou d'un pigment.

11. Procédé de préparation d'une lentille de contact molle selon la revendication 1, caractérisé par les stades opératoires suivants :

a) formation d'une pièce brute de lentille ou d'une copie de lentille de contact à l'échelle réduite à partir d'une résine d'alcool polyvinylique essentiellement non réticulée ayant un poids moléculaire moyen, moyenne en poids, d'au moins 6 000,

b) recuit de cette pièce de lentille ou de cette copie de lentille dans des conditions activant la cristallinité, afin d'accroître efficacement le module d'élasticité de la lentille de contact gonflée ultérieurement, en sorte que l'alcool polyvinylique recuit ait un degré de cristallinité de 0,195 à 0,70, défini par la proportion en poids de matière cristalline contenue dans le polymère d'alcool polyvinylique,

c) élimination des parties voulues de cette pièce brute de lentille recuite lorsqu'on est parti d'une pièce brute, jusqu'à ce que le reste de la pièce brute recuite forme une copie de cette lentille de contact à l'échelle réduite ; et

d) gonflement de cette copie recuite dans un solvant de gonflement en l'absence ou, si l'on désire réticuler, en présence d'un agent réticulant chimique, pour obtention d'une lentille de contact gonflée conservant essentiellement sa forme.

12. Procédé selon la revendication 11, dans lequel le stade opératoire a) est réalisé en présence de 0,01 à 70 % en poids de plastifiant par rapport au poids total de plastifiant et d'alcool polyvinylique.

13. Procédé selon la revendication 12, dans lequel on utilise de 0,01 à 30 % en poids de plastifiant et d'alcool polyvinylique.

14. Procédé selon la revendication 11, dans lequel le plastifiant consiste en glycérol ou propylèneglycol.

15. Procédé selon la revendication 11, dans lequel le stade de recuit b) est effectué à la chaleur, à des températures de 45 °C à 200 °C, en présence de moins de 20 % en poids d'eau.